# FASCICULE DE BREVET EUROPEEN

(11) **EP 2 859 038 B1**
(45) Date de publication et mention de la délivrance du brevet: **02.08.2017**
(21) Numéro de dépôt: 13731402.7
(22) Date de dépôt: 10.06.2013
(51) Int. Cl.: C08J 11/06, B29B 17/00, B29B 17/04, B29K 21/00, B29K 105/00, B29C 47/60, C08J 11/10, B29K 105/24

(54) **PROCÉDÉ DE DÉVULCANISATION D'UN CAOUTCHOUC VULCANISÉ**
VERFAHREN ZUR ENTVULKANISIERUNG VON VULKANISIERTEM GUMMI
METHOD OF DEVULCANISING VULCANISED RUBBER

(30) Priorité: 08.06.2012 FR 1255360
(43) Date de publication de la demande: 15.04.2015
(73) Titulaire: Société Plymouth Française, 69320 Feyzin (FR)
(72) Inventeur: ARNAUD, Daniel, F-42100 Saint Etienne (FR)
(74) Mandataire: Chevalier, Renaud Philippe
(86) Numéro de dépôt international: PCT/FR2013/051329
(87) Numéro de publication internationale: WO 2013/182830

(56) Documents cités:
- EP-A1- 0 887 372
- WO-A1-2004/031277
- US-A- 4 341 667
- US-A- 4 607 796
- US-A- 6 133 413
- KHAIT, KLEMENTINA: "New solid-state shear extrusion pulverization process for used tire rubber recovery", RUBBER WORLD, vol. 216, no. 2, mai 1997 (1997-05), pages 38-39, XP008160141,

## Description

La présente invention concerne un procédé de dévulcanisation d'un caoutchouc vulcanisé.

Dans le cadre de la présente invention, on entend par caoutchouc vulcanisé, un élastomère brut (par exemple du polyisoprène) qui a été soumis à un procédé chimique au cours duquel il a été formulé avec des additifs dont un agent vulcanisant (par exemple le soufre) permettant la vulcanisation et a subi un traitement thermique de manière à créer des ponts entre les macromolécules dudit élastomère pour former un réseau tridimensionnel.

Il résulte de la vulcanisation un matériau moins plastique mais plus élastique que l'élastomère brut de départ. A savoir que sous l'effet d'une contrainte appropriée, le réseau tridimensionnel se déforme. Il revient à l'état initial quand la contrainte est supprimée, et ce grâce à la présence des ponts formés au cours de la vulcanisation qui sont modélisables par des ressorts.

La vulcanisation est une transformation irréversible, réalisée à des températures généralement comprises entre 150 et 350°C, car au-delà de cette valeur de 350°C, la plupart des élastomères se dégraderaient. La dégradation se traduirait par une évolution des propriétés viscoélastiques de l'élastomère avec, en général, une augmentation de la composante visqueuse et une diminution de la composante élastique.

Après vulcanisation, le caoutchouc vulcanisé est infusible. En effet, la vulcanisation est la réalisation de liaisons chimiques, généralement à base de soufre, entre les chaînes macromoléculaires de l'élastomère. Ces liaisons chimiques ont pour origine la rupture d'une double liaison résiduelle d'une macromolécule. Il est important de noter que l'élastomère vulcanisé possède encore, en son sein, de nombreuses doubles liaisons résiduelles, qui sont autant de sites pouvant être utilisés ultérieurement pour de nouvelles réactions chimiques.

Le fait que le caoutchouc vulcanisé soit infusible interdit ultérieurement toute nouvelle mise en forme d'un article manufacturé en un tel matériau qui peut être souhaitée, par exemple, dans le cas de la fabrication d'un article non conforme ou dans celui d'un article en fin de vie ou encore pour le recyclage de chutes de production.

C'est pourquoi, à ce jour, les seules opérations de recyclage couramment appliquées sur des articles manufacturés en caoutchouc vulcanisé sont le broyage ou le déchiquetage pour l'obtention d'une poudre, d'une poudrette ou d'un granulat de matière élastique. La matière élastique ainsi obtenue peut ensuite être utilisée comme charge élastique ou charge de dilution dans différents produits. Elle ne peut en aucun cas être liée chimiquement à une matrice polymère.

A cet égard, on connaît le brevet US 4 607 796 qui décrit un procédé de fabrication de poudre (poudrette) de caoutchouc par pulvérisation. Le produit final obtenu à l'issue du procédé est une poudre avec des particules de taille n'excédant pas 500 µm qui est destinée à être utilisée en tant que charges dans des mélanges caoutchouteux. Cette poudre n'est pas un produit dévulcanisé.

De plus, la publication KHAIT, KLEMENTINA : « New solid-state shear extrusion pulverization process for used tire rubber recovery", RUBBER WORLD, vol. 216, n°2, mai 1997, pages 38-39, décrit un procédé de fabrication d'une poudre par pulvérisation de caoutchouc vulcanisé. Cette poudre n'est pas un produit dévulcanisé.

Ainsi, au vu des applications industrielles limitées du caoutchouc vulcanisé broyé et surtout du fait que l'opération de mise en forme est impossible après la vulcanisation, on comprend aisément que le recyclage d'articles manufacturés en caoutchouc vulcanisé demeure un problème technique et économique d'importance majeure, et ce eu égard à la croissance permanente de la fabrication de tels articles en caoutchouc vulcanisé.

Certes, il est connu de faire subir un traitement chimique et thermique très agressif au cours duquel le réseau tridimensionnel du caoutchouc vulcanisé est démantelé. Cependant, le produit obtenu à l'issue d'un tel traitement, appelé « caoutchouc régénéré », exhibe des propriétés physiques et mécaniques moins performantes que le caoutchouc vulcanisé d'origine. Cela limite son emploi dans des procédés de fabrication nécessitant des matériaux devant se conformer à des exigences drastiques. C'est pourquoi, cette méthode de recyclage de caoutchouc vulcanisé n'est pas pleinement satisfaisante.

En outre, plusieurs travaux scientifiques ont été menés sur des procédés de dégradation thermomécanique partielle d'un caoutchouc vulcanisé, ou autrement dit des « procédés de dévulcanisation partielle ». A cet égard, des brevets décrivent de tels procédés qui mettent en oeuvre des dégradations partielles et contrôlées d'un caoutchouc vulcanisé sous l'action simultanée d'un cisaillage important et d'une montée en pression.

A titre d'exemples, on peut citer la demande internationale WO 02/05965 A1 et la demande de brevet français FR 2 947 555 A1 qui, cependant font état de procédés nécessitant un fort apport d'énergie.

En outre, les technologies présentées dans ces deux demandes de brevet sont délicates à mettre en oeuvre et présentent une faible reproductibilité de par les phénomènes inhérents à un traitement thermomécanique qui initie des dégradations partielles de l'élastomère.

En effet, il est connu de l'homme de l'art que les phénomènes de dégradation des chaînes macromoléculaires conduisent à la création de radicaux libres dont l'espérance de vie est nulle. Ce principe, connu sous le nom d'Approximation de l'Etat Quasi Stationnaire (abrégé « AEQS »), précise que les radicaux libres vont disparaître en se recombinant quasi instantanément avec d'autres radicaux libres présents dans leur voisinage immédiat. Il y a donc création de micro-domaines locaux dont la structure est aléatoire et non reproductible. De même, cette réaction qui est amorcée à haute température, se poursuivra selon une cinétique beaucoup plus faible à température ambiante, conduisant à une instabilité dans le temps des propriétés du caoutchouc ainsi dévulcanisé. Autrement dit, le produit résultant de ce traitement thermomécanique est chimiquement dégradé et instable et donc non pleinement satisfaisant.

Par ailleurs, la demande internationale WO 2012/017414 A1 décrit un traitement thermomécanique de particules élémentaires de caoutchouc dans une extrudeuse de type bi-vis co-rotative. L'extrudeuse utilisée est équipée de longues vis, dont le rapport de la longueur des vis sur le diamètre des vis est supérieur à 64. Le traitement thermique se fait à une seule température comprise entre 35°C et 350°C, préférentiellement de l'ordre de 270°C. La forme des différents éléments de vis permet de faire varier le taux de cisaillement et de créer ainsi localement l'auto-échauffement nécessaire à la rupture des ponts issus de la vulcanisation.

Cependant, le procédé décrit dans cette demande internationale WO 2012/017414 A1 ne permet pas de réaliser une dévulcanisation optimale. En effet, il présente les deux inconvénients majeurs suivants :
- De par la typologie du traitement appliqué (coupure des ponts de vulcanisation par élévation du taux de cisaillement dans une enceinte maintenue à une température constante), il n'est pas envisageable d'avoir une homogénéisation en température du matériau lors de l'opération de cisaillage permettant sa dévulcanisation.
- De même, il n'est pas possible d'abaisser immédiatement la température du matériau après la dévulcanisation et de bloquer ainsi le début de dégradation thermique liée à la présence locale d'une température supérieure à la température de dégradation du caoutchouc.

Le matériau ainsi obtenu ne présente pas une structure chimique homogène, mais des micro-domaines dégradés, rendant toute opération de re-vulcanisation ultérieure très aléatoire.

Il faut également noter que le matériau qui sort de l'extrudeuse est à une température élevée qui est fonction de la température interne de l'extrudeuse et du cisaillage auquel il a été soumis. Ce matériau présente ainsi souvent les inconvénients d'être collant et auto-adhérant. Si sa température est très élevée (à savoir supérieure à 250°C ou 350°C selon le caoutchouc traité), il est susceptible de se dégrader de façon irréversible.

De plus, il convient de bien noter que les procédés de dégradation thermomécanique partielle tels que celui faisant l'objet de la demande internationale WO 2012/017414 A1 conduisent à la rupture de la majorité des liaisons issues de la vulcanisation et des doubles liaisons résiduelles précitées, dont l'intérêt majeur a été détaillé ci-dessus, rendant ainsi toute opération de re-vulcanisation ultérieure impossible.

En outre, la demande EP 0 887 372 A1 décrit un procédé de dévulcanisation qui comprend les étapes suivantes :
a) une pulvérisation de caoutchouc vulcanisé ;
b) un chauffage à une température comprise entre 180 et 350° du caoutchouc pulvérisé et vulcanisé ; et
c) l'application d'une pression de cisaillage sur le caoutchouc pulvérisé vulcanisé.

Le procédé de dévulcanisation décrit dans cette demande de brevet européen ne comprend pas d'étapes de malaxage et de traitement mécanique.

Ainsi, on relève de l'art antérieur décrit ci-dessus qu'aucune des technologies développées n'a permis de trouver une solution pleinement performante, économique et facile à mettre en oeuvre pour le recyclage d'articles en caoutchouc vulcanisés.

La présente invention remédie à l'ensemble des inconvénients détaillés ci-dessus relatifs au recyclage de caoutchouc vulcanisé, et tout particulièrement à ceux inhérents à la mise en oeuvre d'un procédé de dégradation thermomécanique, en proposant un procédé de dévulcanisation d'un caoutchouc vulcanisé permettant d'obtenir un matériau composite polymérique partiellement ou totalement dévulcanisé et surtout, à la différence des technologies connues précitées, non dégradé.

Ainsi, la présente invention a pour premier objet un procédé de dévulcanisation d'un caoutchouc vulcanisé tel que revendiqué aux revendications 1 à 9 qui comprend les étapes suivantes :
a) on dispose d'au moins un caoutchouc vulcanisé ;
b) on broie en copeaux ou en granulats le caoutchouc vulcanisé ;
c) on malaxe le caoutchouc broyé obtenu à l'issue de l'étape b) de manière à l'homogénéiser en forme et en température.
d) on réalise un traitement mécanique non dégradant sur le caoutchouc malaxé obtenu à l'issue de l'étape c) pour obtenir un composite polymérique

Au cours de l'étape c) du procédé, les contraintes mécaniques emmagasinées lors de la vulcanisation du caoutchouc sont dissipées.

L'étape c) de malaxage est réalisée avantageusement en soumettant le caoutchouc broyé obtenu à l'issue de l'étape b) à un faible taux de cisaillement, à savoir préférentiellement compris entre 100 s⁻¹et 500 s⁻¹.

L'étape d) de traitement mécanique non dégradant est réalisée de telle manière que les liaisons de vulcanisation sont rompues et que les radicaux libres issus de ces ruptures sont recombinés tout en préservant les doubles liaisons résiduelles de la vulcanisation pour obtenir un composite polymérique.

L'étape d) de traitement mécanique non dégradant est avantageusement réalisée en soumettant le caoutchouc malaxé obtenu à l'issue de l'étape c) à un taux de cisaillement élevé, de préférence compris entre 10³s⁻¹et 10⁶s⁻¹.

Le composite polymérique obtenu à l'issue du procédé selon l'invention présente de manière tout à fait avantageuse, de par sa structure chimique particulière, des possibilités de se lier par des liaisons de type covalente ou ionique à d'autres matériaux polymériques dont les caoutchoucs.

Ce composite polymérique est un produit complètement différent de la poudrette obtenue à l'issue d'un processus de broyage et de déchiquetage d'articles manufacturés en caoutchouc vulcanisé qui a été mentionnée ci-dessus. La poudrette est en effet un broyat de caoutchouc qui reste à l'état vulcanisé, et donc autrement dit n'est pas un produit dévulcanisé.

Ce composite polymérique est souple, peu élastique et a un aspect comparable à un caoutchouc ou un mélange de caoutchoucs non vulcanisé. Plus précisément, il se présente sous la forme d'une pâte homogène et non granuleuse, dont on peut mesurer la viscosité en fonction de la température.

De plus, ce composite polymérique obtenu à l'issue du procédé de dévulcanisation selon l'invention a pour propriété, à l'instar d'un caoutchouc ou d'un mélange de caoutchoucs non vulcanisé (autrement dit d'un mélange de caoutchouc cru), de gonfler significativement plus que le caoutchouc vulcanisé utilisé comme produit de départ dudit procédé, lorsqu'il est plongé dans un solvant comme le cyclohexane.

Or, il est parfaitement établi que le taux de gonflement d'un caoutchouc ou d'un mélange de caoutchoucs dans le cyclohexane est inversement proportionnel à son taux de réticulation. Autrement dit : plus le taux de dévulcanisation est important, plus le taux de gonflement dans le cyclohexane est important.

Dans le cadre de la présente invention, on a mesuré :
- le taux de gonflement d'un mélange à base de caoutchouc naturel (NR) vulcanisé provenant de pneus de poids lourds. Il était de 182.
- le taux de gonflement du composite polymérique obtenu à l'issue du procédé de dévulcanisation qui a été réalisé à partir de ce mélange à base de caoutchouc naturel (NR) vulcanisé. Il était de 354.

Cette augmentation du taux de gonflement, à savoir de 182 à 354, démontre clairement que le composite polymérique obtenu à l'issue du procédé de dévulcanisation selon l'invention est un matériau en caoutchouc dévulcanisé.

En outre, du fait des spécificités du procédé de dévulcanisation selon l'invention, le composite polymérique ainsi obtenu possède encore des doubles liaisons résiduelles du caoutchouc vulcanisé de départ qui a été dévulcanisé et qui seront disponibles lors d'une opération de vulcanisation sur ledit composite polymérique.

Le composite polymérique peut être utilisé dans un alliage avec des polymères thermoplastiques, mais également avec des caoutchoucs vulcanisables. Dans ce dernier cas, le composite polymérique est chimiquement lié après vulcanisation à la matrice formée par le caoutchouc. Il peut, dans des formulations de caoutchouc, se substituer partiellement à un mélange caoutchouc « vierge », et ce sans altération des propriétés mécaniques et physico-chimiques résultantes du mélange des différents constituants desdites formulations de caoutchouc.

Aussi, du fait de son aspect pâteux et homogène lui conférant une certaine viscosité, le composite polymérique obtenu à l'issue du procédé de dévulcanisation selon l'invention présente l'avantage de pouvoir être utilisé, comme composant actif prêt à être revulcanisé en combinaison avec un mélange cru dans toutes les technologies de transformation du caoutchouc que sont notamment l'extrusion, l'injection, le calandrage, et ce sans modification d'aspect ou des caractéristiques mécaniques des pièces finies.

C'est pourquoi, il est décrit un matériau thermoplastique obtenu par alliage d'au moins un polymère thermoplastique avec au moins un composite polymérique obtenu selon le procédé de l'invention.

Il est également décrit un mélange élastomérique comprenant environ de 1% à 50%, de préférence de 10% à 50%, en poids du composite polymérique obtenu à l'issue du procédé. Avantageusement, le mélange élastomérique comprend en outre environ 1% à 50%, de préférence 10% à 50%, en poids de caoutchouc vulcanisé broyé qui peut se présenter sous la forme d'une poudrette.

De manière préférée, ledit mélange élastomérique comprend au moins un élastomère choisi dans le groupe constitué par le caoutchouc polyisoprène (IR), le caoutchouc naturel (NR), le caoutchouc isobutylène isoprène (IIR), les caoutchoucs éthylène-propylène-diène monomère (EPDM), les caoutchoucs styrène-butadiène (SBR), le caoutchouc polychlroroprène (CR), le caoutchouc nitrile (NBR), le caoutchouc butadiène acrylonitrile hydrogéné (HNBR), le polyéthylène chlorosulfoné (CSM), les silicones, les polyuréthanes, le caoutchouc acrylique (ACM).

Il est aussi décrit un article manufacturé en caoutchouc vulcanisé comprenant au moins un composite polymérique obtenu selon le procédé de l'invention.

Enfin, il est mentionné une installation de dévulcanisation d'un caoutchouc vulcanisé qui met en oeuvre le procédé selon l'invention et qui sera décrite plus amplement après la description détaillée du procédé ci-dessous.

Selon le procédé de l'invention, le caoutchouc vulcanisé à dévulcaniser peut être choisi parmi tous les types de caoutchouc et leurs mélanges qui ont subi un processus de vulcanisation. Il peut s'agir par exemple de :
- caoutchouc polyisoprène (IR),
- caoutchouc naturel (NR),
- caoutchouc polybutadiène (BR),
- caoutchouc éthylène-propylène (EPR),
- caoutchouc styrène-butadiène (SBR),
- caoutchouc butadiène-acrylonitrile (NBR),
- caoutchouc isobutylène isoprène (IIR),
- caoutchouc butadiène acrylonitrile hydrogéné (HNBR),
- caoutchouc éthylène-propylène-diène monomère (EPDM),
- polychlroroprène (CR),
- polyuréthanes,
- polyéthylène chlorosulfoné (CSM),
- caoutchouc acrylique (ACM),
- silicones.

Parmi tous ces types de caoutchouc précités, on distingue deux groupes.

Il y a un premier groupe comprenant les caoutchoucs qui ne sont pas résistants à des températures élevées de l'ordre de 250°C. Autrement dit, ces caoutchoucs sont connus pour se dégrader à partir de températures de l'ordre de 250°C. Dans ce premier groupe figurent :
- caoutchouc naturel (NR),
- caoutchouc polybutadiène (BR),
- caoutchouc polyisoprène (IR),
- caoutchouc styrène-butadiène (SBR),
- les polyuréthanes non résistants à des températures supérieures à 250°C.

Il y a un deuxième groupe comprenant les caoutchoucs qui sont résistants jusqu'à des températures très élevées, de l'ordre de 250°C à 350°C. Autrement dit, ces caoutchoucs sont connus pour ne pas se dégrader, même lorsqu'ils sont soumis à des températures très élevées de l'ordre de 250°C à 350°C. Par contre, au-delà de 350°C, ces caoutchoucs se dégraderont aussi.

Dans ce deuxième groupe figurent :
- caoutchouc éthylène-propylène (EPR),
- caoutchouc butadiène-acrylonitrile (NBR),
- isobutylène isoprène (IIR),
- caoutchouc butadiène acrylonitrile hydrogéné (HNBR),
- caoutchouc éthylène-propylène-diène monomère (EPDM),
- caoutchouc polychlroroprène (CR),
- polyéthylène chlorosulfoné (CSM),
- caoutchouc acrylique (ACM),
- les silicones,
- les polyuréthanes résistants à des températures de 250°C à 350°C.

Les polyuréthanes peuvent faire partie du premier groupe et du deuxième groupe selon la structure chimique du polyuréthane considéré.

Dans le cadre de la présente invention, il est très avantageux et important de tenir compte de ces propriétés de résistance ou non à la chaleur des caoutchoucs qui sont soumis à ce procédé de dévulcanisation.

En effet, au cours de ce procédé de dévulcanisation, on cherche à optimiser le débit et la vitesse de la machine mettant en oeuvre les étapes c) et d) du procédé. Cette optimisation est favorisée par une montée en température maximum qui cependant, ne doit pas dépasser la température limite à partir de laquelle le caoutchouc ou le mélange de caoutchoucs qu'on soumet au procédé de dévulcanisation se dégrade. Or, selon les caoutchoucs considérés, s'ils appartiennent au premier groupe ou au deuxième groupe, cette température maximum (ou gamme de températures maximales) ne sera pas la même.

Autrement dit, pour les caoutchoucs du deuxième groupe qui sont résistants à des températures plus élevées que les caoutchoucs du premier groupe, on peut se permettre d'atteindre au cours du procédé selon l'invention des températures maximales plus élevées qu'avec des caoutchoucs du premier groupe, et ce sans risque de dégradation de la matière, et avec l'avantage d'une productivité plus élevée.

Il convient donc de bien concilier les paramètres suivants : l'augmentation de la productivité du procédé grâce à une mise en oeuvre des étapes du procédé à des températures élevées tout en veillant à ne pas dépasser les températures de dégradation des caoutchoucs soumis à ce procédé de dévulcanisation, de manière à ne pas obtenir un composite polymérique dévulcanisé dégradé qui serait beaucoup moins exploitable dans les exemples d'utilisation détaillées ci-dessus.

C'est pourquoi, dans la description du procédé selon l'invention qui suit, il est tenu compte des caractéristiques de température de dégradation du caoutchouc (ou du mélange de caoutchoucs) qu'on soumet à ce procédé, à savoir qu'on distingue selon que le caoutchouc appartient au premier groupe ou au deuxième groupe, de manière à obtenir la meilleure productivité du procédé selon le caoutchouc à dévulcaniser considéré.

Dans le cadre de la présente invention, le caoutchouc vulcanisé à dévulcaniser peut être constitué par des articles manufacturés non conformes, par des chutes de production, ou bien par des articles en fin de vie qui ont été récupérés après des opérations de tri effectuées dans des déchetteries. Ainsi, le procédé selon l'invention est parfaitement approprié pour recycler des articles manufacturés en caoutchouc vulcanisé.

A l'étape a) du procédé selon l'invention, on dispose d'au moins un caoutchouc vulcanisé. Autrement dit, il peut s'agir d'un caoutchouc vulcanisé ou d'un mélange de caoutchoucs vulcanisé (le mélange de caoutchoucs ayant été soumis à un processus de vulcanisation).

Dans la suite de la description du procédé selon l'invention, on parlera de caoutchouc vulcanisé. Il faudra bien sûr comprendre qu'il peut s'agir non seulement d'un caoutchouc vulcanisé (à savoir un caoutchouc qui a été mélangé avec des additifs appropriés pour permettre la vulcanisation de ce caoutchouc) mais aussi d'un mélange de caoutchoucs qui a été vulcanisé (à savoir plusieurs caoutchoucs qui ont été mélangés avec des additifs appropriés pour permettre la vulcanisation de ce mélange de caoutchoucs).

Au cours de l'étape b) du procédé selon l'invention, le caoutchouc vulcanisé à dévulcaniser est broyé en copeaux ou en granulats de faibles dimensions, de préférence de l'ordre de 5 mm à 15 mm. La taille des copeaux ou des granulats n'est pas un paramètre critique pour le procédé selon l'invention. Elle doit être compatible avec le dispositif d'alimentation en caoutchouc vulcanisé que comprend l'équipement mettant en oeuvre le procédé selon l'invention.

A l'issue de l'étape b) de broyage, le caoutchouc vulcanisé broyé est de préférence ramené à température ambiante, de l'ordre de 25°C.

Dans un mode préféré de l'invention, à l'issue de l'étape b) de broyage et préalablement à l'étape c) de malaxage, le caoutchouc vulcanisé est soumis dans un premier outillage à une température comprise :
- entre 25°C et 200°C, de préférence de 25°C à 150°C, lorsque le caoutchouc vulcanisé est un caoutchouc du premier groupe détaillé ci-dessus,
- entre 25°C et 350°C, lorsque le caoutchouc vulcanisé est un caoutchouc du deuxième groupe détaillé ci-dessus.

Ce premier outillage peut consister en une extrudeuse bi-vis co-rotative dont la forme des vis correspond de manière préférée à un segment de transfert de type SE ou SK (éléments permettant d'exercer une poussée latérale sur le matériau). La longueur des vis est avantageusement comprise entre 4 et 8 fois le diamètre des vis, préférentiellement environ 4 fois le diamètre des vis.

Le profil des éléments de vis de l'extrudeuse permet de maintenir constant le volume de caoutchouc vulcanisé délivré, par exemple par un doseur (notamment un doseur gravimétrique ou un doseur volumétrique) placé en amont, et de le convoyer vers un deuxième outillage qui constitue l'outillage de malaxage décrit ci-après.

L'étape c) consiste en une mise en température sans contraintes, au cours de laquelle les phénomènes physiques suivants se produisent :
- la dissipation des contraintes mécaniques emmagasinées dans le caoutchouc vulcanisé lors de sa vulcanisation ou autrement dit un relaxage des contraintes du caoutchouc vulcanisé,
- la montée en température homogène du caoutchouc vulcanisé sans l'amorce d'une dégradation thermique,
- l'homogénéisation du caoutchouc vulcanisé, afin que la température, la forme (à savoir la taille des granulats) et le niveau de stress soient identiques en tout point du caoutchouc vulcanisé.

Dans un mode de réalisation de l'invention, l'étape c) de malaxage est réalisée dans un deuxième outillage dont :
- la température de l'outillage est comprise entre 100°C et 250°C, de préférence entre 125°C et 250°C, lorsque le caoutchouc vulcanisé est un caoutchouc du premier groupe détaillé ci-dessus,
- la température de l'outillage est comprise entre 100°C et 350°C, lorsque le caoutchouc vulcanisé est un caoutchouc du deuxième groupe détaillé ci-dessus.

De manière avantageuse, le deuxième outillage consiste en une extrudeuse bi-vis co-rotative.

Dans ce mode de réalisation de l'étape c), l'homogénéisation de la température au sein du caoutchouc broyé, ainsi que sa mise en forme sont alors assurées par le profil des vis.

Les éléments de vis sont préférentiellement des segments de transfert de type SE ou SK ou des éléments permettant par rétro-pompage d'augmenter le temps de séjour du matériau dans l'outillage. Ces éléments permettant le rétro-pompage sont connus sous le nom de CME (« Continous Mixing Element »).

De plus, dans ce deuxième outillage, la longueur des vis est avantageusement comprise entre 12 et 36 fois le diamètre des vis, préférentiellement environ 28 fois le diamètre des vis.

L'étape d) du procédé selon l'invention permet d'apporter l'énergie suffisante pour réaliser la rupture des liaisons issues de la vulcanisation que comporte le caoutchouc vulcanisé et la recombinaison des radicaux libres ainsi formés par la formation de nouvelles liaisons de basse énergie, et ce grâce à des mécanismes tels que des substitutions nucléophiles.

Les énergies de liaison des principales fonctions chimiques présentes dans un caoutchouc vulcanisé sont reprises dans le tableau 1 ci-dessous.

**Tableau 1 - Energie de liaison des principaux groupes présents dans un caoutchouc vulcanisé**

| Liaison | Energie de liaison |
|---|---|
| C-C | 376 kJ/mol |
| C-S | 362 kJ/mol |
| S-S | 272 kJ/mol |
| C-H | 418 kJ/mol |
| S-H | 364 kJ/mol |
| C-N | 308 kJ/mol |

Les liaisons les plus « fragiles » qui sont détruites les premières au cours de l'étape d) du procédé selon l'invention sont les liaisons -S-S- et C-N, car leurs énergies de liaison sont les plus faibles de celles mentionnées dans le tableau 1.

Avantageusement, le traitement mécanique non dégradant de l'étape d) consiste en un cisaillage.

Le cisaillage conduisant à un fort échauffement interne du caoutchouc vulcanisé traité, il est très important de tenir compte de ce phénomène et de réguler spécifiquement la température au cours de cette étape d), afin d'endiguer tout problème de dégradation thermique lié à un auto-échauffement excessif du caoutchouc vulcanisé traité par le procédé de dévulcanisation selon l'invention. Cette dégradation a lieu pour des températures supérieures à 250°C ou 350°C selon les types de caoutchoucs ou lorsque le caoutchouc vulcanisé subit des cisaillages très élevés (de l'ordre de 10⁵ s⁻¹). C'est pourquoi, il est essentiel qu'à l'issue de l'étape d), la température du composite polymérique résultant du cisaillage du caoutchouc soit inférieure à la température de dégradation du caoutchouc.

En outre, à l'issue de cette étape d), le composite polymérique est souple, peu élastique et comparable à un mélange de caoutchouc non vulcanisé.

Dans un mode de réalisation de l'invention, l'étape d) consiste en un cisaillage réalisé dans un outillage, par exemple une extrudeuse bi-vis co-rotative, qui est porté à une température comprise :
- entre 50°C et 175°C, lorsque le caoutchouc vulcanisé est un caoutchouc du premier groupe détaillé ci-dessus,
- entre 50°C et 350°C, lorsque le caoutchouc vulcanisé est un caoutchouc du deuxième groupe détaillé ci-dessus.

Dans un autre mode de réalisation de l'invention, le traitement mécanique non dégradant de l'étape d) comprend les étapes suivantes :
d1) on réalise un premier traitement mécanique non dégradant sur le caoutchouc malaxé obtenu à l'issue de l'étape c) ;
d2) on réalise un deuxième traitement mécanique non dégradant sur le caoutchouc obtenu à l'issue de l'étape d1).

Au cours de l'étape d1) se produit l'amorçage de la rupture des liaisons de vulcanisation. Au cours de l'étape d2) se produit la recombinaison des radicaux libres issus des ruptures de liaisons de l'étape d1).

Avantageusement, le caoutchouc est soumis au cours de l'étape d1) à un taux de cisaillement compris 10⁴ s⁻¹ et 10⁶ s⁻¹, et au cours de l'étape d2) à un taux de cisaillement inférieur à celui de l'étape d1), de préférence compris entre 10³ s⁻¹ et 10⁵ s⁻¹.

L'étape d1) consiste avantageusement en un cisaillage et est réalisée dans un troisième outillage porté à une température comprise :
- entre 50°C et 250°C, de préférence entre 100°C et 250°C, lorsque le caoutchouc vulcanisé est un caoutchouc du premier groupe détaillé ci-dessus,
- entre 50°C et 350°C, de préférence entre 150°C et 350°C, lorsque le caoutchouc vulcanisé est un caoutchouc du deuxième groupe détaillé ci-dessus.

Le troisième outillage peut consister en une extrudeuse bi-vis co-rotative dont la longueur des vis est comprise entre 4 et 20 fois le diamètre des vis, préférentiellement environ12 fois le diamètre des vis.

Les éléments de vis utilisés sont préférentiellement de type SME (Screw Mixing Element), TME (Turbine Mixing Element) ou ZME (Zahnmischelement).

L'étape d2) consiste avantageusement en un cisaillage et est réalisée dans un quatrième outillage porté à une température comprise :
- entre 50°C et 200°C, de préférence entre 90°C et 175°C, lorsque le caoutchouc vulcanisé est un caoutchouc du premier groupe détaillé ci-dessus,
- entre 50°C et 300°C, de préférence entre 150°C et 300°C, lorsque le caoutchouc vulcanisé est un caoutchouc du deuxième groupe détaillé ci-dessus.

Le quatrième outillage peut consister en une extrudeuse bi-vis co-rotative, dont la longueur des vis est avantageusement comprise entre 4 et 16 fois le diamètre des vis, préférentiellement environ 8 fois le diamètre des vis.

Les profils des vis utilisées sont principalement de type KB (Kneading Block). Ce type d'élément permet une répartition homogène des contraintes au sein du matériau.

Au cours de cette étape d2), le caoutchouc est maintenu à une température où le mouvement brownien permet des recombinaisons moléculaires des radicaux libres formés à l'étape d1). Ces recombinaisons moléculaires des radicaux libres permettent de figer la structure du composite polymérique qui sera obtenu à l'issue de cette étape d2).

L'aptitude à la formulation de ce composite polymérique est fortement dépendante des structures moléculaires formées lors de ces recombinaisons moléculaires.

De manière préférée, à l'issue de l'étape d) et préalablement à l'étape de refroidissement qui est décrite plus en détail ci-après, le composite polymérique est convoyé et refroidi dans un cinquième outillage porté à une température comprise entre 10°C et 60°C, de préférence entre 10°C et 50°C, de préférence de l'ordre de 30°C. Cela permet de bloquer toutes les réactions chimiques qui étaient en cours pendant l'étape d). Si ce refroidissement est insuffisamment performant, des recombinaisons moléculaires non maîtrisées pourraient se produire et dégrader fortement l'aptitude à la reformulation du composite polymérique.

Le cinquième outillage peut consister en une extrudeuse bi-vis co-rotative dont la longueur des vis est comprise entre 4 et 16 fois le diamètre des vis, préférentiellementenviron 8 fois le diamètre des vis.

Les profils de vis peuvent être analogues à ceux utilisés pendant l'étape c), à savoir des segments de type SE, SK ou CME.

Le cinquième outillage comprend avantageusement des évents pour permettre l'évacuation des gaz générés par les réactions chimiques mises en oeuvre lors de l'étape d2).

Dans un mode de réalisation avantageux de l'invention, les étapes c) et d) (l'étape d se décomposant éventuellement en étapes d1) et d2)) du procédé de l'invention sont réalisées dans un unique outillage, de préférence une extrudeuse bi-vis co-rotative, dont le profil des vis est parfaitement adapté pour que puissent être effectuées les étapes de malaxage et de traitement mécanique non dégradant du procédé selon l'invention.

C'est pourquoi dans ce mode de réalisation de l'invention, les premier, deuxième, troisième, quatrième et cinquième outillages décrits ci-dessus sont réunis en un seul outillage qui peut consister en une extrudeuse bi-vis co-rotative.

Le rapport de la longueur des vis sur le diamètre des vis est choisi avantageusement supérieur à 30.

Dans un mode de réalisation de l'invention, ce rapport est égal à 60, et les vis de l'extrudeuse comprennent les portions suivantes :
- une première portion pour laquelle la longueur des vis est égale à environ 4 fois le diamètre des vis ;
- une deuxième portion pour laquelle la longueur des vis est égale à environ 28 fois le diamètre des vis ;
- une troisième portion pour laquelle la longueur des vis est égale à environ 12 fois le diamètre des vis ;
- une quatrième portion pour laquelle la longueur des vis est égale à environ 8 fois le diamètre des vis ;
- une cinquième portion pour laquelle la longueur des vis est égale à environ 8 fois le diamètre des vis.

Ainsi, le caoutchouc vulcanisé tout juste broyé est tout d'abord introduit dans la première portion, puis malaxé dans la deuxième portion (étape c), ensuite soumis à un premier cisaillage (étape d1) effectué avec un taux de cisaillement de l'ordre de 10⁴ s⁻¹ à 10⁶ s⁻¹ dans la troisième portion, suivi d'un deuxième cisaillage (étape d2) effectué avec un taux de cisaillement de l'ordre de 10³s⁻¹ à 10⁵s⁻¹ dans la quatrième portion et enfin refroidi dans la cinquième portion des vis de l'extrudeuse.

De manière préférée, l'étape de malaxage du procédé selon l'invention est réalisée dans une extrudeuse bi-vis co-rotative conçue de manière à ce que le profil des vis soit choisi pour que la longueur de la portion des vis dédiée à cette étape de malaxage représente environ la moitié de la longueur totale des vis. En effet, l'étape de malaxage est une étape essentielle du procédé selon l'invention.

Afin de pouvoir réguler précisément la température au sein de l'extrudeuse bi-vis co-rotative, les vis sont logées dans un fourreau et l'extrudeuse comprend en outre :
- un collier chauffant entourant le fourreau et générant un chauffage externe à une température contrôlée ;
- une pluralité de canaux répartis dans le fourreau et dans lesquels circulent de l'eau à une température contrôlée.

De plus, afin de créer des zones de l'extrudeuse soumises à des températures variées et contrôlées, il peut être prévu de diviser l'extrudeuse en une pluralité de zones (par exemple 15 zones de longueur chacune égale à 4 fois le diamètre des vis dans le cas où le rapport de la longueur des vis sur celui du diamètre des vis est égal à 60), chaque zone bénéficiant d'un chauffage externe et d'une circulation d'eau contrôlée pour que la température régnant au sein de la zone de l'extrudeuse soit appropriée pour la réalisation de l'étape du procédé selon l'invention qui est mise en oeuvre dans cette zone de l'extrudeuse.

La vitesse de rotation des vis de l'extrudeuse peut être comprise entre 15 et 300 tr.min⁻¹, de préférence de l'ordre de 180 tr.min⁻¹.

Par exemple, le débit de l'extrudeuse est de manière préférée compris entre 60 kg/h et 150 kg/h. Le débit dépend du type d'extrudeuse.

Bien entendu, d'autres équipements tout à fait à la portée de l'homme du métier peuvent être utilisés à la place d'une extrudeuse bi-vis co-rotative telle que décrite ci-dessus pour mettre en oeuvre les étapes c) et d) du procédé de dévulcanisation d'un caoutchouc vulcanisé.

Le procédé selon l'invention peut en outre comprendre au moins l'une des étapes suivantes :
- une étape de refroidissement, par exemple un refroidissement dans un bac rempli d'eau à une température comprise entre environ 15°C et 35°C ;
- une étape de traitement de surface, par exemples un talcage, un dépôt d'un savon, d'une émulsion silicone, ou d'un promoteur d'adhésion comme un silane ou un isocyanate bloqué, ou encore un film polyéthylène à bas point de fusion...) ou encore tout autre traitement de surface parfaitement à la portée de l'homme du métier.

Le procédé selon la présente invention nécessite peu d'énergie. La consommation globale d'énergie est de l'ordre de 0,5 à 1 kWh/kg de caoutchouc vulcanisé traité.

La présente invention a aussi pour objet une installation pour la mise en oeuvre du procédé de dévulcanisation d'un caoutchouc dévulcanisé décrit ci-dessus.

Dans un mode de réalisation de l'invention, cette installation comprend au moins :
- un broyeur ;
- au moins une extrudeuse bi-vis co-rotative ;

Elle peut en outre comprendre au moins l'un des équipements suivants :
- une unité de stockage ;
- une pompe à vide ou un équipement de transport de granulés par aspiration ou tout autre système équivalent ;
- un doseur ;
- une unité de refroidissement ;
- une unité d'application d'un traitement de surface ;
- une unité de séchage ;
- une unité de conditionnement.

L'invention sera mieux comprise à l'aide de la description détaillée qui est exposée ci-dessous en référence au dessin annexé représentant, à titre d'exemple non limitatif, une forme de réalisation d'une installation mettant en oeuvre le procédé selon l'invention et du fourreau d'une extrudeuse bi-vis co-rotative utilisée au cours de ce procédé.

La figure 1 représente de manière schématique une installation mettant en oeuvre le procédé selon l'invention.

La figure 2 est une vue en coupe transversale du fourreau d'une extrudeuse bi-vis co-rotative qui peut être utilisée pour le procédé de dévulcanisation selon l'invention.

L'installation 10 comprend une première unité de stockage 1 dans laquelle est stocké du caoutchouc vulcanisé à dévulcaniser selon le procédé de l'invention.

Le caoutchouc vulcanisé à dévulcaniser est acheminé jusqu'à un broyeur 2. Une fois broyé, il est acheminé jusqu'à une deuxième unité de stockage 3, puis à l'aide d'une pompe à vide 4 jusqu'à un doseur 5.

Le doseur 5 permet de réguler le volume de caoutchouc vulcanisé broyé qui entre dans l'extrudeuse bi-vis co-rotative 6 qui a été conçue pour que les étapes de malaxage et de cisaillage du procédé de dévulcanisation selon l'invention y soient réalisées.

A la sortie de l'extrudeuse bi-vis co-rotative 6, on obtient un composite polymérique qui est acheminé vers une unité de refroidissement et d'application d'un traitement de surface 7, régulée à une température comprise entre environ 15 et 35°C et dans laquelle le composite polymérique est convoyé.

Le traitement de surface consiste en un dépôt de talc ou d'une solution aqueuse de savon, etc.

Ensuite, le composite polymérique recouvert de talc ou de savon est acheminé vers une unité de séchage 8 qui comprend des lames d'air. La température de l'air est de l'ordre de 30 à 40 °C. Le composite polymérique décrit un parcours complexe dans cette unité de séchage 8 et son temps de séchage est de l'ordre de 45 à 50 minutes.

A l'issue du séchage, le composite polymérique est stocké dans une unité de conditionnement 9.

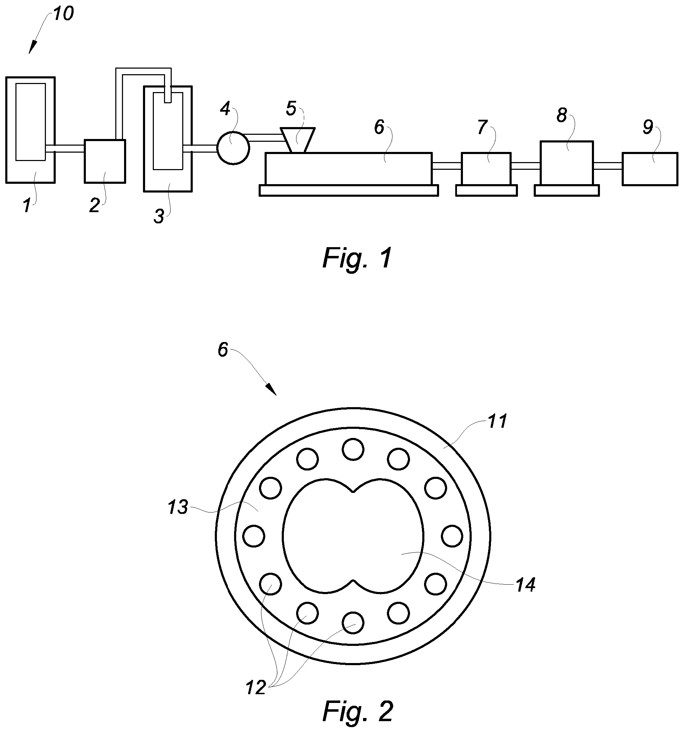

Sur la figure 2 est représenté le fourreau 13 d'une extrudeuse 6 qui comprend un collier chauffant 11 entourant le fourreau 13, et dans lequel sont logés les deux vis 14 et une pluralité de canaux 12. Les canaux 12 sont destinés à une circulation d'eau pour refroidir l'extrudeuse 6.

### Partie expérimentale :

Le procédé de dévulcanisation selon l'invention a été mis en oeuvre avec les caoutchoucs vulcanisés suivants :
1) le polyisoprène (IR) ;
2) le caoutchouc naturel (NR) ;
3) le caoutchouc éthylène-propylène-diène monomère EPDM) avec une dureté de 80 ShA ;
4) le caoutchouc éthylène-propylène-diène monomère EPDM) avec une dureté de 40 ShA ;
5) l'isobutylène isoprène (IIR).

L'outillage utilisé était une extrudeuse bi-vis co-rotative dont la vitesse des vis est indiquée dans la dernière ligne du tableau 2 ci-dessous en fonction du caoutchouc 1) à 5) considéré.

De plus dans ce tableau 2 sont détaillées, selon le caoutchouc 1) à 5) considéré, les températures de l'extrudeuse bi-vis co-rotative en fonction de l'avancée du procédé selon l'invention, à savoir :
- avant l'étape c) ;
- pendant l'étape c) ;
- pendant l'étape d1) ;
- pendant l'étape d2).

**Tableau 2 : Températures des étapes du procédé selon l'invention et vitesse de vis selon le caoutchouc à dévulcaniser.**

| | **Température (°C) de l'extrudeuse bi-vis** | | | | |
|---|---|---|---|---|---|
| | **IR** | **NR** | **EPDM dureté 80ShA** | **EPDM dureté 40ShA** | **IIR** |
| **Avant étape c)** | 90 | 160 | 280 | 270 | 100 |
| **Etape c)** | 160 | 185 | 320 | 300 | 260 |
| **Etape d1)** | 180 | 190 | 310 | 260 | 260 |
| **Etape d2)** | 115 | 145 | 260 | 240 | 230 |
| | | | | | |
| **vitesse vis (trs/min)** | 225 | 200 | 250 | 300 | 275 |

L'exemple ci-dessous illustre l'utilisation d'environ 20% en poids d'un composite polymérique obtenu à partir du procédé selon l'invention dans une formulation de caoutchouc.

Cette formulation de caoutchouc correspondait à une formulation standard de la gamme des caoutchoucs vulcanisés commercialisés par la société PLYMOUTH FRANCAISE.

L'élastomère (ou caoutchouc) brut de départ était du polyisoprène.

Le composite polymérique a été obtenu par application du procédé selon l'invention à un échantillon de la formulation A telle que décrite dans le tableau 3 ci-dessous après vulcanisation.

Pour ce faire, un échantillon de la formulation A a été soumis au procédé de dévulcanisation selon l'invention qui a été réalisé dans une extrudeuse bi-vis co-rotative dont les caractéristiques techniques étaient les suivantes :
Le rapport de la longueur des vis sur le diamètre des vis était égal à 60. La vitesse de rotation des vis était de 185 tr.min⁻¹.

L'extrudeuse comprenait les portions suivantes :
- une première portion pour laquelle la longueur des vis était égale à 4 fois le diamètre des vis ;
- une deuxième portion pour laquelle la longueur des vis était égale à 28 fois le diamètre des vis ;
- une troisième portion pour laquelle la longueur des vis était égale à 12 fois le diamètre des vis ;
- une quatrième portion pour laquelle la longueur des vis était égale à 8 fois le diamètre des vis ;
- une cinquième portion pour laquelle la longueur des vis était égale à 8 fois le diamètre des vis.

L'échantillon de la formulation a tout d'abord été introduit dans la première portion de l'extrudeuse qui était à une température de 85°C.

Ensuite, l'échantillon a été malaxé dans la deuxième portion de l'extrudeuse (étape c)), dont la température d'entrée de cette deuxième portion de l'extrudeuse était de 200°C et la température de sortie de cette deuxième portion de l'extrudeuse était de 150°C.

L'échantillon a ensuite été soumis à un premier cisaillage effectué avec un taux de cisaillement de l'ordre de 10⁴ s⁻¹ à 10⁶ s⁻¹ dans la troisième portion de l'extrudeuse qui était à une température de 165°C (étape d1), suivi d'un deuxième cisaillage effectué avec un taux de cisaillement de l'ordre de 10³s⁻¹ à 10⁵s⁻¹ dans la quatrième portion de l'extrudeuse qui était à une température de 125°C (étape d2).

L'échantillon a enfin été refroidi dans la cinquième portion de l'extrudeuse qui était à une température de 30°C de manière à obtenir un composite polymérique.

La formulation B, qui contenait 35 pcr (pour cent de caoutchouc) de ce composite polymérique ainsi obtenu, présentait une composition pondérale identique à la formulation A.

Les conditions de mélangeage, de mise en forme et de vulcanisation utilisées pour la « formulation A » et pour la « formulation B» ont été strictement identiques.

Cependant, pour obtenir exactement les mêmes performances mécaniques avec les formulations A et B, le système de vulcanisation (accélérateurs + soufre) et le taux de charge ont dû être ajustés.

Le tableau 3 ci-dessous récapitule :
- Les compositions de respectivement :
   ○ 2^{ième} colonne : la formulation A ;
   ○ 3^{ième} colonne : la formulation B qui comprend 35,25 g de composite polymérique;
   ○ 4^{ième} colonne : la formulation B mais exprimée en répartissant les constituants des 35,25 g du composite polymérique dans les différents constituants du caoutchouc de la formulation A.
- Le ratio exprimé en % de soufre/élastomère pour les formulations A et B.
- Le ratio exprimé en % de accélérateur/élastomère pour les formulations A et B.
- Le ratio exprimé en % de charges/élastomère pour les formulations A et B.

**Tableau 3 : Compositions des formulations A et B**

| | Formulation A (g) | Formulation B avec composite polymérique (g) | Formulation B avec répartition des constituants du composite polymérique (g) |
|---|---|---|---|
| Elastomère | 100,00 | 76,92 | 97,21 |
| Composite polymérique | | 35,25 | |
| Charges et additifs | 50,00 | 38,46 | 52,67 |
| Soufre | 1,25 | 0,96 | 1,26 |
| Accélérateurs | 1,50 | 1,15 | 1,62 |
| Total | 152,75 | 152,75 | 152,75 |
| | | | |
| % Ratio soufre/élastomère | 1,25 % | - | 1,30 % |
| % Ratio accélérateurs/ élastomère | 1,50 % | - | 1,67 % |
| % Ratio charges/élastomère | 5,00 % | - | 5,42 % |

Un vieillissement se composant des 3 cycles suivants : lavage machine à 90°C ; suivi d'un séchage en étuve de 6 heures à 120°C a été réalisé sur les formulations A et B.

On a effectué les mesures suivantes sur les formulations A et B :
- La mesure du module à 100% ;
- La mesure de l'allongement à la rupture ;
- La mesure du pourcentage de perte du module après un vieillissement tel que détaillé ci-dessus.
- La mesure du pourcentage de résistance à la déchirure.

Le tableau 4 ci-dessous présente les caractéristiques mécaniques comparées des deux formulations A et B :

**Tableau 4 : caractérisation des formulations A et B**

| Caractéristiques | Formulation A | Formule B |
|---|---|---|
| Module à 100% | 1,1 MPa | 1,1 MPa |
| Allongement rupture | 650 % au minimum | 650 % au minimum |
| % perte du module après vieillissement | 30 % au maximum | 10 % à 30 % au maximum |
| % de résistance à la déchirure | 400 % au minimum | 400 % au minimum |

On relève du tableau 4 que les caractéristiques physiques de module à 100%, d'allongement à la rupture et le pourcentage de résistance à la déchirure sont similaires pour les formulations A et B. Et en ce qui concerne le pourcentage de perte du module après vieillissement, celui de la formulation B (à savoir selon l'invention) est même un peu meilleur que celui de la formulation A.

Aussi, les tenues aux UV des deux formulations A et B ont été évaluées pour être comparées : elles sont également similaires.

Ainsi, ces résultats témoignent que la substitution d'un mélange caoutchouc vierge par un composite polymérique obtenu selon le procédé de l'invention dans une formulation de caoutchouc destiné à être vulcanisé, et ce à hauteur de 20% en poids, ne change en rien les propriétés physiques du caoutchouc final vulcanisé.

En d'autres termes, cet exemple met en évidence le fait que le composite polymérique obtenu selon le procédé de l'invention qui constitue un procédé de recyclage d'un caoutchouc vulcanisé peut être utilisé en remplacement d'un mélange caoutchouc vierge dans un nouveau mélange à vulcaniser, et ce sans altération des propriétés mécaniques et physiques du produit final réalisé.

De plus, il a pu être mis en évidence que le pouvoir amortissant et la résistance en compression d'une formulation de caoutchouc vulcanisé n'étaient pas modifiés par l'introduction de 30 à 40 pcr de composite polymérique obtenu selon le procédé de l'invention dans ladite formulation.

Le composite polymérique selon l'invention possède également, de par sa structure moléculaire, une forte aptitude à l'incorporation des charges comme de la poudrette de caoutchouc. Il est ainsi possible d'augmenter le taux d'incorporation du composite polymérique et de la poudrette dans une formulation de caoutchouc. L'incorporation de cette poudrette de caoutchouc permet de baisser significativement le coût des matières premières.

Le tableau 5 ci-dessous présente deux formulations dont les propriétés mécaniques et élastiques (module, allongement à la rupture, vieillissement, résistance aux UV, dureté...) sont similaires.

La formulation C a été réalisée avec des mélanges caoutchoucs vierges.

La formule D intègre 70 pcr du composite polymérique obtenu selon le procédé de l'invention et 42 pcr de poudrette de caoutchouc.

**Tableau 5 : composition des formulations C et D**

| Composant | Formulation C | Formulation D avec composite polymérique et poudrette | Formulation D avec répartition des constituants du composite polymérique |
|---|---|---|---|
| Caoutchouc naturel | 42,00 | 26,90 | 35,65 |
| SBR | 14,00 | 8,97 | 11,88 |
| Composite polymérique | | 25,12 | |
| Poudrette | | 15,07 | 15,07 |
| Soufre | 1,40 | 0,90 | 1,19 |
| Accélérateur | 0,85 | 0,54 | 0,71 |
| Charge et additifs | 41,75 | 22,50 | 35,50 |
| Total | 100,00 | 100,00 | 100,00 |
| | | | |
| Ratio soufre / élastomère | 2,50 % | - | 2,45 % |
| Ratio accélérateurs/ élastomère | 1,52 % | - | 1,50 % |
| Ratio charges / élastomère | 74,6 % | - | 106,4 % |

## Revendications

1. Procédé de dévulcanisation d'un caoutchouc vulcanisé qui comprend les étapes suivantes :
a) on dispose d'au moins un caoutchouc vulcanisé ;
b) on broie en copeaux ou en granulats le caoutchouc vulcanisé ;
c) on malaxe à un faible taux de cisaillement compris entre 100 s⁻¹ et 500 s⁻¹ le caoutchouc broyé obtenu à l'issue de l'étape b) de manière à homogénéiser en taille de granulats et en température ;
d) on réalise un traitement mécanique non dégradant consistant en un cisaillage à un taux de cisaillement élevé compris entre 10³ s⁻¹et 10⁶ s⁻¹ sur le caoutchouc malaxé obtenu à l'issue de l'étape c) pour obtenir un composite polymérique souple, peu élastique, ayant un aspect comparable à un caoutchouc ou à un mélange de caoutchoucs non vulcanisé et se présentant sous la forme d'une pâte homogène et non granuleuse.

2. Procédé de dévulcanisation selon la revendication 1, **caractérisé en ce que** le caoutchouc vulcanisé appartient à un premier groupe constitué par les caoutchoucs qui se dégradent à partir de températures de l'ordre de 250°C.

3. Procédé de dévulcanisation selon la revendication 1, **caractérisé en ce que** le caoutchouc vulcanisé appartient à un deuxième groupe constitué par les caoutchoucs qui ne se dégradent pas lorsqu'ils sont soumis à des températures de l'ordre de 250°C à 350°C.

4. Procédé de dévulcanisation selon la revendication 2 ou 3, **caractérisé en ce qu'**à l'issue de l'étape b) de broyage et préalablement à l'étape c) de malaxage, le caoutchouc vulcanisé est soumis dans un premier outillage à une température comprise :
- entre 25°C et 200°C, lorsque le caoutchouc vulcanisé est un caoutchouc du premier groupe,
- entre 25°C et 350°C, lorsque le caoutchouc vulcanisé est un caoutchouc du deuxième groupe.

5. Procédé de dévulcanisation selon l'une quelconque des revendications 2 à 4, **caractérisé en ce que** l'étape c) de malaxage est réalisée dans un deuxième outillage dont :
- la température de l'outillage est comprise entre 100°C et 250°C, lorsque le caoutchouc vulcanisé est un caoutchouc du premier groupe,
- la température de l'outillage est comprise entre 100°C et 350°C, lorsque le caoutchouc vulcanisé est un caoutchouc du deuxième groupe.

6. Procédé de dévulcanisation selon l'une quelconque des revendications 2 à 5, **caractérisé en ce que** l'étape d) est réalisée dans un outillage porté à une température comprise :
- entre 50°C et 175°C, lorsque le caoutchouc vulcanisé est un caoutchouc du premier groupe,
- entre 50°C et 350°C, lorsque le caoutchouc vulcanisé est un caoutchouc du deuxième groupe.

7. Procédé de dévulcanisation selon la revendication 6, **caractérisé en ce que** l'étape d) comprend les étapes suivantes :
- d1) on réalise un premier traitement mécanique non dégradant sur le caoutchouc malaxé obtenu à l'issue de l'étape c) en le soumettant dans un troisième outillage à un taux de cisaillement compris 10⁴ s⁻¹ et 10⁶ s⁻¹ et dont la température du troisième outillage est comprise :
o entre 50°C et 250°C, de préférence entre 100°C et 250°C, lorsque le caoutchouc vulcanisé est un caoutchouc du premier groupe,
o entre 50°C et 350°C, de préférence entre 150°C et 350°C, lorsque le caoutchouc vulcanisé est un caoutchouc du deuxième groupe.
- d2) on réalise un deuxième traitement mécanique non dégradant sur le caoutchouc obtenu à l'issue de l'étape d1) en le soumettant dans un quatrième outillage à un taux de cisaillement compris entre 10³ s⁻¹ et 10⁵ s⁻¹ et dont la température du quatrième outillage est comprise :
o entre 50°C et 200°C, de préférence entre 90°C et 175°C, lorsque le caoutchouc vulcanisé est un caoutchouc du premier groupe,
o entre 50°C et 300°C, de préférence entre 150°C et 300°C, lorsque le caoutchouc vulcanisé est un caoutchouc du deuxième groupe.

8. Procédé de dévulcanisation selon l'une quelconque des revendications 1 à 7, **caractérisé en ce qu'**à l'issue de l'étape d) le composite polymérique est convoyé et refroidi dans un cinquième outillage porté à une température comprise entre 10°C et 60°C.

9. Procédé de dévulcanisation selon l'une quelconque des revendications 1 à 8, **caractérisé en ce qu'**il comprend en outre au moins l'une des étapes suivantes :
- une étape de refroidissement ;
- une étape de traitement de surface choisi dans le groupe constitué par le talcage, le dépôt d'un savon, d'une émulsion silicone, d'un promoteur d'adhésion ou d'un film polyéthylène à bas point de fusion

## Patentansprüche

1. Verfahren zur Devulkanisation eines vulkanisierten Gummis, das die folgenden Schritte umfasst:
a) Verfügen über mindestens einen vulkanisierten Gummi;
b) Schroten des vulkanisierten Gummis in Späne oder Granulate;
c) Kneten mit einer geringen Schergeschwindigkeit im Bereich zwischen 100 s⁻¹ und 500 s⁻¹ des geschroteten Gummis, erhalten am Ausgang von Schritt b), um bezüglich der Granulatgröße und der Temperatur zu homogenisieren;
d) Durchführen einer nicht beschädigenden mechanischen Behandlung, bestehend aus einer Scherung mit einer erhöhten Schergeschwindigkeit im Bereich zwischen 103 s⁻¹ und 10⁶ s⁻¹ auf dem gekneteten Gummi, erhalten am Ausgang von Schritt c), um ein weiches, wenig elastischen Polymerkomposit zu erhalten, das ein Aussehen hat, das mit einem Gummi oder einer nicht vulkanisierten Mischung aus Gummis vergleichbar ist und die Form einer gleichförmigen und nicht granulierten Paste aufweist.

2. Verfahren zur Devulkanisation nach Anspruch 1, **dadurch gekennzeichnet, dass** der vulkanisierte Gummi zu einer ersten Gruppe gehört, bestehend aus den Gummis, die sich ab Temperaturen um 250 °C zersetzen.

3. Verfahren zur Devulkanisation nach Anspruch 1, **dadurch gekennzeichnet, dass** der vulkanisierte Gummi zu einer zweiten Gruppe gehört, bestehend aus den Gummis, die sich nicht zersetzen, wenn sie Temperaturen um 250 °C bis 350 °C ausgesetzt werden.

4. Verfahren zur Devulkanisation nach Anspruch 2 oder 3, **dadurch gekennzeichnet, dass** am Ausgang von Schritt 2) des Schrotens und vor dem Schritt c) des Knetens der vulkanisierte Gummi in einem ersten Werkzeug einer Temperatur unterzogen wird, die im Bereich liegt:
- zwischen 25 °C und 200 °C, wenn der vulkanisierte Gummi ein Gummi der ersten Gruppe ist,
- zwischen 25 °C und 350 °C, wenn der vulkanisierte Gummi ein Gummi der zweiten Gruppe ist.

5. Verfahren zur Devulkanisation nach einem der Ansprüche 2 bis 4, **dadurch gekennzeichnet, dass** der Schritt c) des Knetens in einem zweiten Werkzeug durchgeführt, wobei:
- die Temperatur des Werkzeugs im Bereich zwischen 100 °C und 250 °C liegt, wenn der vulkanisierte Gummi ein Gummi der ersten Gruppe ist,
- die Temperatur des Werkzeugs im Bereich zwischen 100 °C und 350 °C liegt, wenn der vulkanisierte Gummi ein Gummi der zweiten Gruppe ist.

6. Verfahren zur Devulkanisation nach einem der Ansprüche 2 bis 5, **dadurch gekennzeichnet, dass** der Schritt d) in einem Werkzeug durchgeführt wird, das auf eine Temperatur gebracht, die im Bereich liegt:
- zwischen 50 °C und 175 °C, wenn der vulkanisierte Gummi ein Gummi der ersten Gruppe ist,
- zwischen 50 °C und 350 °C, wenn der vulkanisierte Gummi ein Gummi der zweiten Gruppe ist.

7. Verfahren zur Devulkanisation nach Anspruch 6, **dadurch gekennzeichnet, dass** der Schritt d) die folgenden Schritte umfasst:
d1) Durchführen einer nicht beschädigenden mechanischen Behandlung auf dem gekneteten Gummi, der am Ausgang von Schritt c) erhalten wurde, indem er in einem dritten Werkzeug einer Schergeschwindigkeit im Bereich von 10⁴ s⁻¹ und 10⁶ s⁻¹ unterzogen wird, und wobei die Temperatur des dritten Werkzeugs im Bereich liegt:
- zwischen 50 °C und 250 °C, vorzugsweise zwischen 100 °C und 250 °C, wenn der vulkanisierte Gummi ein Gummi der ersten Gruppe ist,
- zwischen 50 °C und 350 °C, vorzugsweise zwischen 150 °C und 350 °C, wenn der vulkanisierte Gummi ein Gummi der zweiten Gruppe ist,
d2) Durchführen einer nicht beschädigenden mechanischen Behandlung, auf dem Gummi, der am Ausgang von Schritt d1) erhalten wurde, indem er in einem vierten Werkzeug einer Schergeschwindigkeit im Bereich von 10³ s⁻¹ und 10⁵ s⁻¹ unterzogen wird, und wobei die Temperatur des vierten Werkzeugs im Bereich liegt von:
- zwischen 50 °C und 200 °C, vorzugsweise zwischen 90 °C und 175 °C, wenn der vulkanisierte Gummi ein Gummi der ersten Gruppe ist,
- zwischen 50 °C und 300 °C, vorzugsweise zwischen 150 °C und 300 °C, wenn der vulkanisierte Gummi ein Gummi der zweiten Gruppe ist.

8. Verfahren zur Devulkanisation nach einem der Ansprüche 1 bis 7, **dadurch gekennzeichnet, dass** am Ausgang von Schritt d) das Polymerkomposit in ein fünftes Werkzeug geführt und abgekühlt wird, das auf eine Temperatur im Bereich zwischen 10 °C und 60 °C gebracht wird.

9. Verfahren zur Devulkanisation nach einem der Ansprüche 1 bis 8, **dadurch gekennzeichnet, dass** es außerdem mindestens einen der folgenden Schritte umfasst:
- einen Schritt des Abkühlens;
- einen Schritt des Behandelns der Oberfläche, ausgewählt aus der Gruppe, bestehend aus Behandeln mit Talk, Aufbringen einer Seife, einer Silikonemulsion, eines Haftvermittlers oder eines Polyethylenfilms mit niedrigem Fusionspunkt.

## Claims

1. A method of devulcanizing a vulcanized rubber which comprises the following steps:
a) providing at least one vulcanized rubber;
b) grinding the vulcanized rubber into chips or aggregates;
c) kneading the ground rubber obtained from step b) at a low rate of shear ranging between 100 s⁻¹ and 500 s⁻¹ in such a manner as to homogenize it in size of aggregates and temperature;
d) achieving a non degrading mechanical treatment on the kneaded rubber obtained from step c) consisting in a shearing at a high rate of shear ranging between 10³ s⁻¹ and 10⁶ s⁻¹ for obtaining a flexible, hardly elastic polymeric composite having an as aspect comparable to a rubber or a mixture of unvulcanized rubbers and coming in the form of a homogenous non granular paste.

2. The devulcanizing method according to claim 1, **characterized in that** the vulcanized rubber belongs to a first group constituted by the rubbers which become degraded starting from temperatures of the order of 250°C.

3. The devulcanizing method according to claim 1, **characterized in that** the vulcanized rubber belongs to a second group constituted by the rubbers which do not become degraded when they are subjected to temperatures in the range of 250°C to 350°C.

4. The devulcanizing method according to claim 2 or 3, **characterized in that** after step b) of grinding and prior to step c) of kneading, the vulcanized rubber is subjected in a first tooling to a temperature ranging:
- between 25°C and 200°C, when the vulcanized rubber is a rubber of the first group,
- between 25°C and 350°C, when the vulcanized rubber is a rubber of the second group.

5. The devulcanizing method according to any one of claims 2 to 4, **characterized in that** step c) of kneading is achieved in a second tooling of which:
- the temperature of the tooling ranges between 100°C and 250°C, when the vulcanized rubber is a rubber of the first group,
- the temperature of the tooling ranges between 100°C and 350 °C, when the vulcanized rubber is a rubber of the second group.

6. The devulcanizing method according to any one of claims 2 to 5, **characterized in that** the step d) is achieved in a tooling taken to a temperature ranging:
- between 50°C and 175°C, when the vulcanized rubber is a rubber of the first group,
- between 50°C and 350°C, when the vulcanized rubber is a rubber of the second group.

7. The devulcanizing method according to claim 6, **characterized in that** the step d) comprises the following steps:
- d1) achieving a first non degrading mechanical treatment on the kneaded rubber after step c) by subjecting it in a third tooling to a shear rate ranging between 10⁴ s⁻¹ and 10⁶ s⁻¹ and of which the temperature of the third tooling ranges:
○ between 50°C and 250°C, preferably between 100°C and 250°C, when the vulcanized rubber is a rubber of the first group,
○ between 50°C and 350°C, preferably between 150°C and 350°C, when the vulcanized rubber is a rubber of the second group.
- d2) achieving a second non degrading mechanical treatment on the rubber obtained after step d1) by subjecting it in a fourth tooling to a shear rate ranging between 10³ s⁻¹ and 10⁵ s⁻¹ and of which the temperature of the fourth tooling ranges:
- between 50°C and 200°C, preferably between 90°C and 175°C, when the vulcanized rubber is a rubber of the first group,
- between 50°C and 300°C, preferably between 150°C and 300°C, when the vulcanized rubber is a rubber of the second group.

8. The devulcanizing method according to any one of claims 1 to 7, **characterized in that** after step d) the polymeric composite is conveyed and cooled in a fifth tooling taken to a temperature ranging between 10°C and 60°C.

9. The devulcanizing method according to any one of claims 1 to 8, **characterized in that** it further comprises at least one of the following steps:
- a cooling step;
- a surface treatment step chosen from the group constituted by the talcing, the soap deposit, a silicone emulsion, an adhesion promoter or a polyethylene film with a low melting point.
